# EUROPÄISCHE PATENTANMELDUNG

(11) **EP 2 599 372 A1**
(43) Veröffentlichungstag der Anmeldung: **05.06.2013**
(21) Anmeldenummer: 12189382.0
(22) Anmeldetag: 22.10.2012
(51) Int. Cl.: A01B 43/00, E02F 3/815

(54) **Roderechen**

(30) Priorität: 15.11.2011 AT 62411 U
(71) Anmelder: Steininger, Werner, 4639 Waizenkirchen (AT)
(72) Erfinder: Steininger, Werner, 4639 Waizenkirchen (AT)
(74) Vertreter: KLIMENT & HENHAPEL

(57) **Zusammenfassung**

Roderechen zur Befestigung am Auslegerarm einer Arbeitsmaschine, der mehrere Zinken (1) umfasst, die entlang einer, die Zinken (1) querenden Verbindungsachse miteinander verbunden sind. Erfindungsgemäß ist hierbei vorgesehen, dass die Zinken (1) durch Schraub- oder Steckverbindungen entlang ihrer Verbindungsachse austauschbar miteinander kuppelbar sind. Vorzugsweise ist hierzu ein Querträger (4) entlang der Verbindungsachse vorgesehen, an dem die Zinken (1) zum Aufschieben und Abnehmen von Zinken (1) in Richtung der Querträgerachse verschiebbar angeordnet sind. Der erfindungsgemäße Roderechen kann somit aufgrund der Austauschbarkeit der Zinken (1) an stark variierende Einsatzbedingungen angepasst werden, und bietet zudem die Möglichkeit der Anordnung zusätzlicher Elemente, wie etwa Schwenkzinken (2) als Greifer oder Rüttelarme. Die Praxistauglichkeit von Roderechen wird somit erheblich verbessert, da deren Einsatzmöglichkeiten erweitert werden und sie auch bei unterschiedlichen Bedingungen bestmöglich einsetzbar sind. Des Weiteren können allfällige Reparaturen ohne großen Aufwand vorgenommen werden, da beschädigte Zinken (1) leicht ausgewechselt werden können.

## Beschreibung

Die Erfindung betrifft einen Roderechen zur Befestigung am Auslegerarm einer Arbeitsmaschine, der mehrere Zinken umfasst, die entlang einer, die Zinken querenden Verbindungsachse miteinander verbunden sind, gemäß dem Oberbegriff von Anspruch 1.

Roderechen werden zum Roden von Wurzelstöcken, Aufarbeiten von Bodenanfüllungen oder Herstellen von groben Planflächen verwendet. Der Roderechen ist in der Regel aus hochwertigem Stahl gefertigt, da insbesondere die Zinken großen Belastungen ausgesetzt sind, wobei die Zinken und der sie verbindende Holm in der Regel einteilig ausgeführt sind. Zur Befestigung am Auslegerarm kann etwa ein Schnellwechselrahmen direkt am Holm des Roderechens angeschweißt sein.

Je nach Anforderung kann der Roderechen in unterschiedlichen Größen ausgeführt werden und dabei eine unterschiedliche Anzahl von Zinken unterschiedlicher Länge aufweisen. Somit werden seitens der Hersteller unterschiedliche Ausführungsvarianten angeboten, oder Spezialausführungen nach Kundenwunsch angefertigt.

Allerdings erweisen sich herkömmliche Roderechen als begrenzt praxistauglich. Das ist insbesondere darauf zurückzuführen, dass derselbe Roderechen mitunter unter stark variierenden Bedingungen und mit wechselnden Arbeitsmaschinen eingesetzt wird, sodass sich oftmals Belastungen einstellen, für die der Roderechen überhaupt nicht ausgelegt ist. Bei Beschädigungen des Roderechens, insbesondere bei einem Zinkenbruch, muss wiederum der gesamte Roderechen erneuert werden.

Es ist daher das Ziel der Erfindung die Praxistauglichkeit von Roderechen zu verbessern, indem die Einsatzmöglichkeiten von Roderechen erweitert und allfällige Reparaturen erleichtert werden. Insbesondere soll der Roderechen auch bei unterschiedlichen Bedingungen bestmöglich einsetzbar sein.

Diese Ziele werden durch die Merkmale von Anspruch 1 erreicht. Anspruch 1 bezieht sich auf einen Roderechen zur Befestigung am Auslegerarm einer Arbeitsmaschine, der mehrere Zinken umfasst, die entlang einer, die Zinken querenden Verbindungsachse miteinander verbunden sind. Erfindungsgemäß ist hierbei vorgesehen, dass die Zinken durch Schraub- oder Steckverbindungen entlang ihrer Verbindungsachse austauschbar miteinander kuppelbar sind. Der Roderechen ist somit nicht mehr einteilig ausgeführt, sondern kann durch unterschiedliche Anzahl und Ausführung der Zinken variiert werden. Insbesondere können die Größe des Roderechens und der Zinken, sowie die Anzahl der Zinken und deren Abstand zueinander verändert werden, um den Roderechen auf diese Weise an unterschiedliche Einsatzsituationen anpassen zu können. Dadurch wird auch die Gefahr eines Zinkenbruches reduziert, da der Roderechen an unterschiedliche Belastungssituationen angepasst werden kann. Im Falle eines Zinkenbruchs kann aber dennoch der schadhafte Zinken leicht gewechselt werden, ohne den gesamten Roderechen erneuern zu müssen.

Die Zinken können dabei unter allfälliger Verwendung von Abstandshaltern unmittelbar miteinander kuppelbar sein. Gemäß einer bevorzugten Ausführungsform wird jedoch vorgeschlagen, dass ein Querträger entlang der Verbindungsachse vorgesehen ist, an dem die Zinken zum Aufschieben und Abnehmen von Zinken in Richtung der Querträgerachse verschiebbar angeordnet sind. Die Zinken werden somit über den Querträger miteinander gekuppelt, sodass mechanische Belastungen vom Querträger aufgenommen werden können, ohne allfällige, direkte Kuppelverbindungen zwischen den Zinken zu belasten. Für eine solche Ausführungsform kann etwa vorgesehen sein, dass der Querträger einen von der Kreisform abweichenden Querschnitt aufweist, und von einem Durchbruch in den Zinken formschlüssig aufgenommen wird. Im montierten Zustand sind die Zinken somit entlang des Querträgers nebeneinander drehsicher angeordnet, wobei lediglich die beiden äußersten Zinken am Querträger fixiert werden, sodass im Gebrauchszustand eine relative Verschiebbarkeit der Zinken unterbunden wird. Falls ein Zinken ausgetauscht oder ergänzt werden soll, muss lediglich die äußerste Fixierung gelöst werden, um einen Zinken vom Querträger abzunehmen oder auf den Querträger aufzuschieben.

Der erfindungsgemäße Roderechen kann dabei leicht mit zusätzlichen Elementen ausgerüstet bzw. nachgerüstet werden. So wird etwa vorgeschlagen, dass zumindest ein, in einer Ebene normal zur Verbindungsachse relativ zu den Zinken verschwenkbarer Schwenkzinken vorgesehen ist. Die Verschwenkbarkeit kann etwa durch einen hydraulischen oder pneumatischen Antrieb am betreffenden Zinken erreicht werden. Auf diese Weise steht ein Greifer zur Verfügung, der zu Verladezwecken, oder auch zum Abschütteln von Erdresten aus dem gerodeten Material verwendet werden kann. In einer bevorzugten Ausführungsform kann dabei der zumindest eine Schwenkzinken mit einem Rüttelantrieb versehen sein, um das Abschütteln von Erdresten oder Steinen zu erleichtern. Der Rüttelantrieb kann dabei etwa durch einen Unwuchtmotor, einen Exzenterantrieb oder ein Umschaltventil am hydraulischen bzw. pneumatischen Antrieb verwirklicht werden.

Die Erfindung wird im Folgenden anhand eines Ausführungsbeispiels mithilfe der beiliegenden Zeichnungen näher erläutert. Es zeigen hierbei die
Fig. 1 eine perspektivische Ansicht einer Ausführungsform eines erfindungsgemäßen Roderechens mit fünf feststehenden Zinken und zwei Schwenkzinken,
Fig. 2 eine Seitenansicht eines erfindungsgemäßen Roderechens mit zwei unterschiedlichen Stellungen eines Schwenkzinkens,
Fig. 3 eine Darstellung des Roderechens gemäß Fig. 1 mit voneinander gelösten Zinken,
Fig. 4 eine Seitenansicht eines erfindungsgemäßen Roderechens mit drei unterschiedlichen Stellungen eines Schwenkzinkens zur Veranschaulichung des Rüttelantriebes, und die
Fig. 5 eine weitere Ausführungsform eines erfindungsgemäßen Roderechens mit einem, zwischen zwei feststehenden Zinken angeordneten Schwenkzinken.

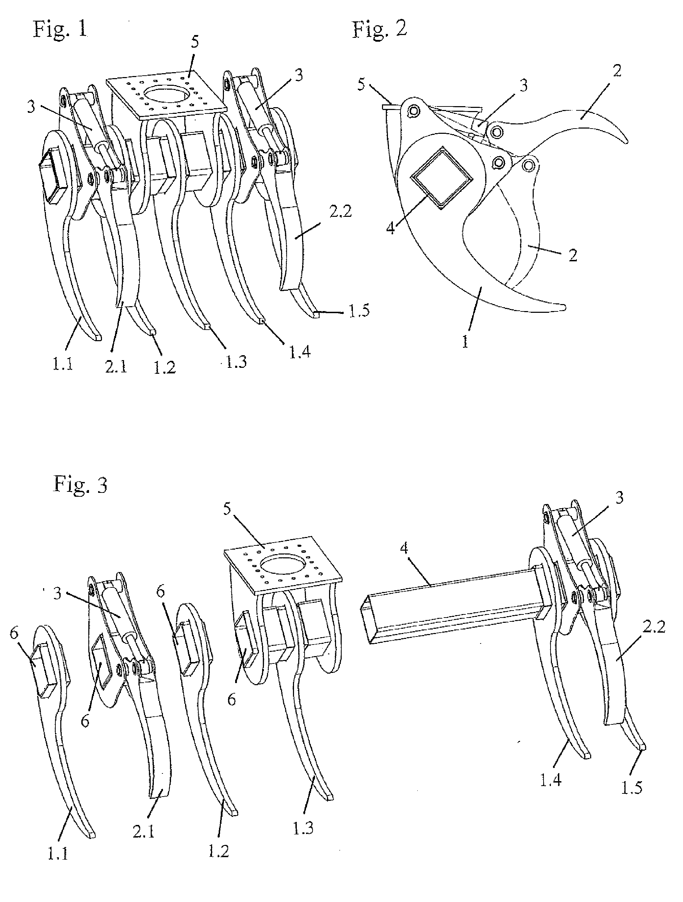

Zunächst wird auf die Fig. 1 und 3 Bezug genommen, die jeweils eine perspektivische Ansicht einer Ausführungsform eines erfindungsgemäßen Roderechens mit fünf feststehenden Zinken 1.1, 1.2, 1.3, 1.4, 1.5 und zwei Schwenkzinken 2.1, 2.2 zeigen. Der Fig. 3 kann dabei entnommen werden, dass die fünf feststehenden Zinken 1.1, 1.2, 1.3, 1.4, 1.5 und die beiden Schwenkzinken 2.1, 2.2 auf einen Querträger 4 aufgeschoben werden können, wobei der Querträger 4 stangen- oder rohrförmig ausgeführt ist. Der Querträger 4 weist einen von der Kreisform abweichenden Querschnitt auf, und wird von einem Durchbruch 6 in den Zinken 1 und den Schwenkzinken 2 formschlüssig aufgenommen. Die Zinken 1 sowie die Schwenkzinken 2 sind somit zum Aufschieben und Abnehmen der Zinken 1 und der Schwenkzinken 2 in Richtung der Querträgerachse verschiebbar angeordnet, wobei in diesem Ausführungsbeispiel die Querträgerachse die Verbindungsachse darstellt. Aufgrund des, von der Kreisform abweichenden Querschnittes des Querträgers 4 und seiner formschlüssigen Aufnahme in den Durchbrüchen 6 wird eine drehsichere Anordnung der Zinken 1 und der Schwenkzinken 2 sicher gestellt. Die Zinken 1 und die Schwenkzinken 2 können dabei auch miteinander durch lösbare Schraub- oder Steckverbindungen verbunden sein, und/oder jeder für sich durch Rastverbindungen und dergleichen am Querträger 4 fixiert sein. Des Weiteren können auch lediglich die beiden äußersten Zinken 1.1 und 1.5 am Querträger 4 fixiert werden, sodass im Gebrauchszustand eine relative Verschiebbarkeit der Zinken 1 und der Schwenkzinken 2 unterbunden wird. Falls ein Zinken 1 oder ein Schwenkzinken 2 ausgetauscht oder ergänzt werden soll, muss lediglich die äußerste Fixierung gelöst werden, um den betreffenden Zinken 1 oder Schwenkzinken 2 vom Querträger 4 abzunehmen oder auf den Querträger 4 aufzuschieben.

Die erfindungsgemäße Ausführung eines Roderechens kann auch leicht mit zusätzlichen Elementen ausgerüstet bzw. nachgerüstet werden. So ist etwa in den Fig. 1 und 3 ein Anbauelement 5 ersichtlich, an dem etwa ein Schnellwechsler zum schnellen An- und Abkoppeln an den Auslegerarm der Arbeitsmaschine (in den Fig. 1 bis 5 nicht eingezeichnet) befestigt werden kann. Die Bewegungen des Auslegerarms werden somit über das Anbauelement 5 auf den Querträger 4 und die übrigen Zinken 1 übertragen. Das Anbauelement 5 kann insbesondere auch für eine bestimmte Arbeitsmaschine ausgelegt sein, sodass durch Wechseln des Anbauelements 5 eine Ankupplung des erfindungsgemäßen Roderechens an unterschiedliche Arbeitsmaschinen ermöglicht werden kann.

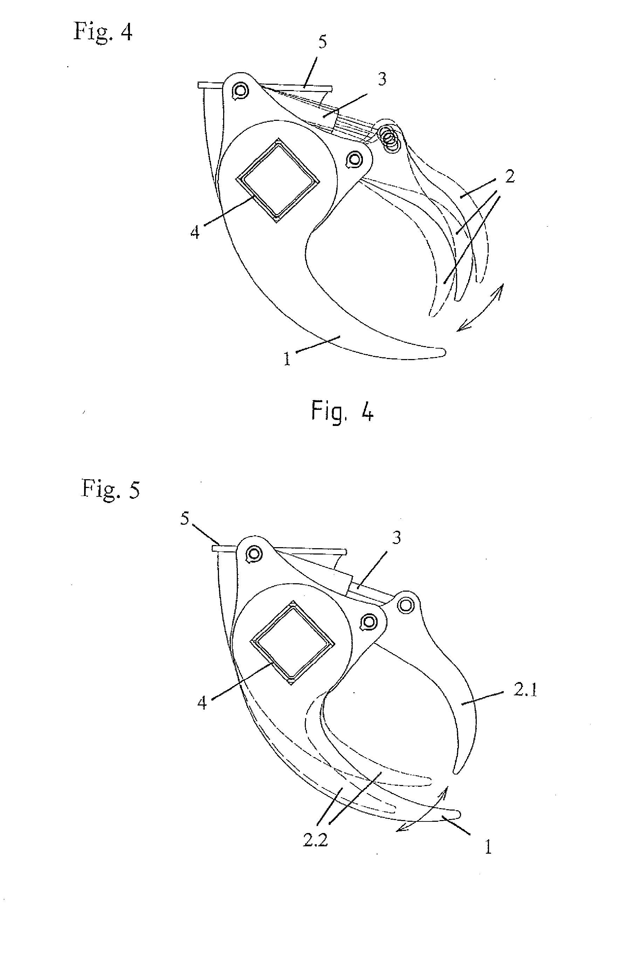

Des Weiteren kann den Fig. 1 und 3 entnommen werden, dass zwei, in einer Ebene normal zur Verbindungs- bzw. Querträgerachse verschwenkbare Schwenkzinken 2.1 und 2.2 vorgesehen sind. Die Verschwenkbarkeit kann etwa durch einen hydraulischen oder pneumatischen Antrieb 3 am betreffenden Schwenkzinken 2 erreicht werden, der über das Anbauelement 5 mit einer hydraulischen oder pneumatischen Steuerung der Arbeitsmaschine verbunden ist (in den Fig. 1 bis 5 nicht eingezeichnet). Auf diese Weise steht ein Greifer zur Verfügung, der zu Verladezwecken, oder auch zum Abschütteln von Erdresten aus dem gerodeten Material verwendet werden kann, wie etwa der Fig. 2 entnommen werden kann, die zwei unterschiedliche Stellungen eines Schwenkzinkens 2 zeigt. In einer bevorzugten Ausführungsform kann dabei zumindest einer der beiden Schwenkzinken 2.1 und 2.2 mit einem Rüttelantrieb versehen sein, um das Abschütteln von Erdresten oder Steinen zu erleichtern. Der Rüttelantrieb kann dabei etwa durch einen Unwuchtmotor, einen Exzenterantrieb oder ein Umschaltventil am hydraulischen bzw. pneumatischen Antrieb 3 verwirklicht werden. Die Funktion des Rüttelantriebs ist in der Fig. 4 veranschaulicht, die eine Seitenansicht eines erfindungsgemäßen Roderechens mit drei unterschiedlichen Stellungen eines Schwenkzinkens 2 zeigt, die rasch hintereinander eingenommen werden und die Rüttelbewegung darstellen.

In der Fig. 5 ist hierzu eine weitere Ausführungsform eines erfindungsgemäßen Roderechens mit einem, zwischen zwei feststehenden Zinken 1 angeordneten Schwenkzinken 2.2 gezeigt. Bei diesem Ausführungsbeispiel dient somit ein erster Schwenkzinken 2.1 als Greifer, und ein zweiter Schwenkzinken 2.2 als Rüttelarm, um das Abschütteln von Erdresten oder Steinen vom gerodeten Material zu ermöglichen.

Der erfindungsgemäße Roderechen bietet somit eine Vielzahl an Vorteilen. Er kann aufgrund der Austauschbarkeit der Zinken 1 an stark variierende Einsatzbedingungen angepasst werden, und bietet zudem die Möglichkeit der Anordnung zusätzlicher Elemente, wie etwa Zinken 1 mit wechselnden Anbauelementen 5 für die Ankopplung unterschiedlicher Arbeitsmaschinen, oder Schwenkzinken 2 als Greifer oder Rüttelarme. Die Praxistauglichkeit von Roderechen wird somit erheblich verbessert, da deren Einsatzmöglichkeiten erweitert werden und sie auch bei unterschiedlichen Bedingungen bestmöglich einsetzbar sind. Des Weiteren können allfällige Reparaturen ohne großen Aufwand vorgenommen werden, da beschädigte Zinken 1 leicht ausgewechselt werden können.

## Patentansprüche

1. Roderechen zur Befestigung am Auslegerarm einer Arbeitsmaschine, der mehrere Zinken (1) umfasst, die entlang einer, die Zinken (1) querenden Verbindungsachse miteinander verbunden sind, **dadurch gekennzeichnet, dass** die Zinken (1) durch Schraub- oder Steckverbindungen entlang ihrer Verbindungsachse austauschbar miteinander kuppelbar sind.

2. Roderechen nach Anspruch 1, **dadurch gekennzeichnet, dass** ein Querträger (4) entlang der Verbindungsachse vorgesehen ist, an dem die Zinken (1) zum Aufschieben und Abnehmen von Zinken (1) in Richtung der Querträgerachse verschiebbar angeordnet sind.

3. Roderechen nach Anspruch 2, **dadurch gekennzeichnet, dass** der Querträger (4) einen von der Kreisform abweichenden Querschnitt aufweist, und von einem Durchbruch (6) in den Zinken (1) formschlüssig aufgenommen wird.

4. Roderechen nach einem der Ansprüche 1 bis 3, **dadurch gekennzeichnet, dass** zumindest ein, in einer Ebene normal zur Verbindungsachse relativ zu den Zinken (1) verschwenkbarer Schwenkzinken (2) vorgesehen ist.

5. Roderechen nach Anspruch 4, **dadurch gekennzeichnet, dass** der zumindest eine Schwenkzinken (2) einen Rüttelantrieb aufweist.
